# EUROPEAN PATENT APPLICATION

(11) **EP 1 634 780 A2**
(43) Date of publication of application: **15.03.2006**
(21) Application number: 05108304.6
(22) Date of filing: 09.09.2005
(51) Int. Cl.: B60R 22/18, A44B 11/25

(54) **Accessory for a safety belt buckle in a mobile vehicle**

(30) Priority: 14.09.2004 IT BO20040567
(71) Applicant: I.F.R.A. S.r.l., 44100 Ferrara (IT)
(72) Inventor: TOSINI, Paolo, 44100, FERRARA (IT)
(74) Representative: Fanzini, Valeriano

(57) **Abstract**

An accessory (10) for a safety device (12) for holding a person in a seat in a motor vehicle. The belt (14) which wraps around and holds the person's body in place is connected to an engagement part (16), which can be releasably coupled to a fastening part (18) fixed to the vehicle chassis. The accessory comprises an element (40) designed to at least partly cover the outer surface of the fixed fastening part (18), there also being means for connecting the covering body to the surface of the fastening part.

## Description

The present invention relates to an accessory for a safety device for holding a person in place in a mobile vehicle.

In particular, said accessory may be used in combination with a safety device which is suitable for holding a person in a seat in a motor vehicle.

It is widely known that people are held in the seat of a vehicle, particularly a motor vehicle, for safety reasons, using safety belts, which comprise a belt which wraps around and holds the person's body, to which an engagement part is connected, which can be releasably coupled to a fastening part fixed to the vehicle chassis.

It is also known that the interior of the motor vehicle may be customised to adapt its appearance to personal or other requirements. At present, for customising the interior of vehicles there are various accessories which, however, do not affect the safety device, that is to say, the seat belt which holds a person's body.

In particular, customising the interior of the motor vehicle may be necessary to overcome aesthetic defects of a specific part, caused by scratches, loss of colour or other reasons, that is to say, when the car gets old and needs a more well-kept interior appearance.

According to another disadvantageous aspect present in the prior art, locating the fixed fastening part for the coupling end of the safety belt is an operation that is not always easy. In particular, when visibility is poor, as for example is the case at night, the user attempts to locate the fixed belt holder, feeling his or her way around, and risks mistakenly locating the fixed fastening part for the nearby seat.

This difficulty locating the fixed fastening part also arises with hurried movements. To locate the part fixed to the chassis to which the belt must be coupled, the safety belt user tends to use a quick glance, without looking directly towards the fixed fastening device, at the risk of getting the movement completely wrong.

According to another disadvantageous aspect, the fixed fastening part could have a surface finish or shape that is awkward or inconvenient for the user to get hold of.

Therefore, an accessory for a safety device for holding a person in place in a vehicle, preferably in a seat in a motor vehicle was provided. The device for holding the person in place comprises a belt which wraps around and holds the person's body in place in the vehicle, the belt being connected to an engagement part which can be releasably coupled to a fastening part, the latter fixed to the vehicle chassis and having an outer surface. The accessory is characterised in that it consists of an element designed to at least partly cover the outer surface of the fixed fastening part; and also being characterised in that there are means for connecting the covering element at the outer surface of the fixed fastening part.

This allows greater customisation of the vehicle interior.

These and other technical characteristics of the invention are clearly described in the claims below and its advantages are more apparent from the detailed description which follows, with reference to the accompanying drawings which illustrate preferred embodiments of the invention provided merely by way of example without restricting the scope of the inventive concept, and in which:
- Figure 1 is an exploded perspective view of the zone for coupling the safety device to the part for holding to the vehicle chassis according to a first preferred embodiment of the accessory in accordance with the present invention;
- Figure 2 is a perspective view of the inner part of the accessory according to the first preferred embodiment of the present invention;
- Figure 3 is a perspective view of the outer part of a second preferred embodiment of the accessory in accordance with the present invention;
- Figure 4 is a perspective view of the outer part of a third preferred embodiment of the accessory in accordance with the present invention.

With reference to the accompanying drawings,

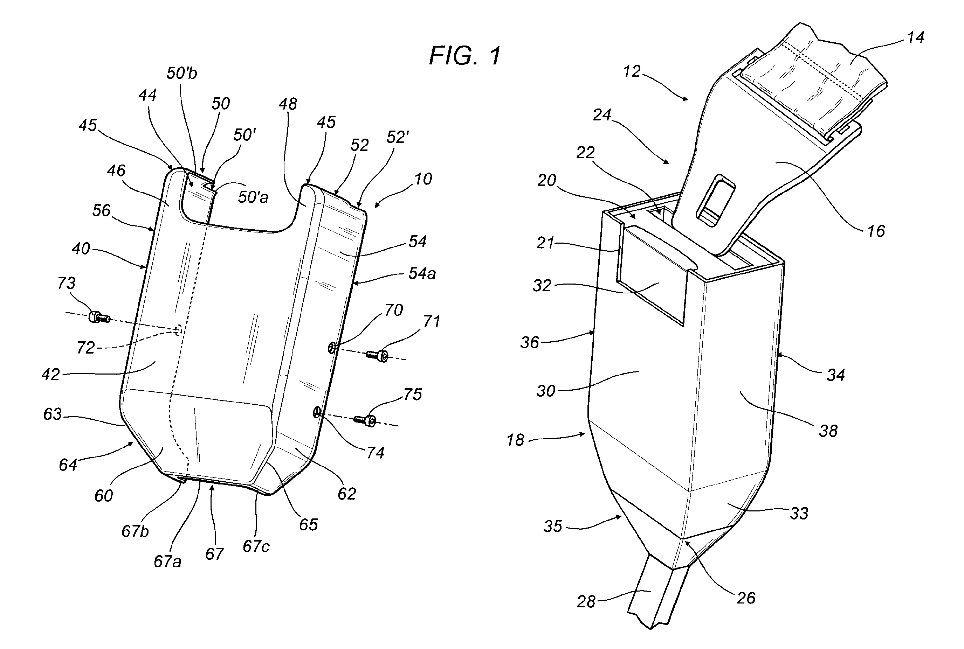

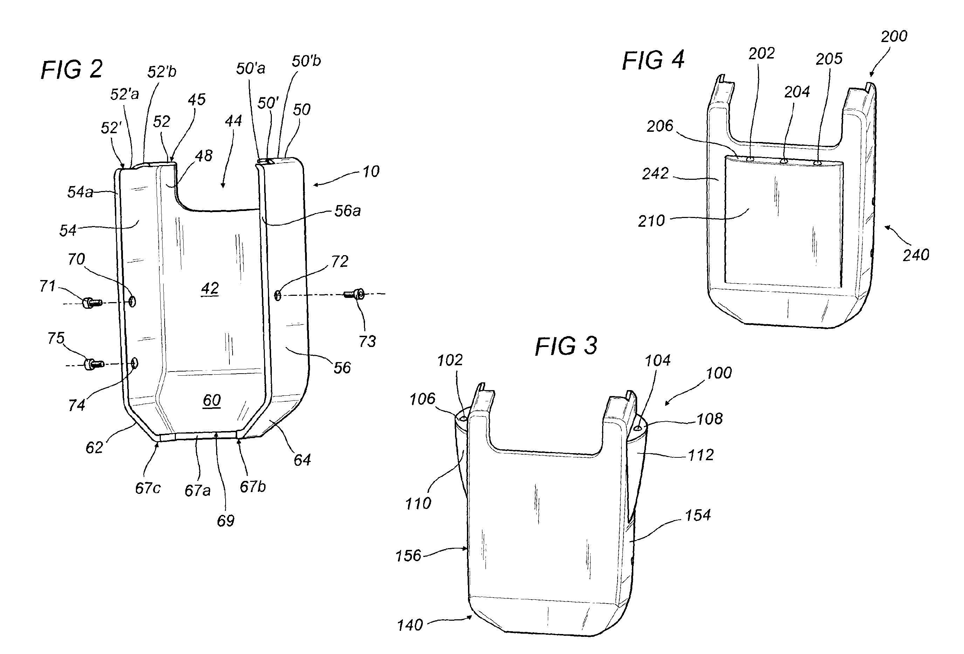

Figures 1 and 2 illustrate a first preferred embodiment 10 of an accessory for a safety device, labelled 12 as a whole in Figure 1, designed to hold a person in place in a mobile vehicle and, in particular, in a seat of a motor vehicle. The vehicle and the seat are not illustrated in detail in the accompanying drawings.

As may be seen from Figure 1, the device for holding the person comprises a belt 14, only partly illustrated, which, when coupled, wraps around and holds a corresponding part of the person's body in the desired place in the vehicle.

As illustrated, the belt 14 is connected to an engagement part 16, which can be releasably coupled to a part 18 for fastening to the vehicle chassis, the part 18 being connected to the vehicle chassis in a fixed fashion. The motor vehicle chassis is not illustrated in detail in the accompanying drawings.

As illustrated in Figure 1, the fixed part 18 for fastening the belt has an upper face 20 with a slit or crack 22, in which a corresponding coupling and holding end portion 24 of the engagement part 16 of the safety belt 14 is inserted.

As illustrated, said fastening part 18, fixed to the chassis, also comprises a lower portion 26 having a general truncated pyramid shape, the faces converging downwards, from the bottom of which there extends a metal cable or piece 28, forming an element for connection to the vehicle chassis, the free end of the piece 28 supporting the fixed fastening part 18.

The fixed fastening part also has a front face 30 with a slit 21 at its upper end portion, in which a push-button 32 extends, which can be reached to release the engagement part 16 of the belt 14 from the fixed fastening part 18.

The fixed fastening part 18 also has a substantially flat rear face 34, not illustrated in detail in Figure 1, and a first and a second short side face 36, 38, also substantially flat. In Figure 1 only the side surface 38 is illustrated in detail. The faces 30, 34, 36 and 38 form part of the outer surface of the fastening part 18.

As illustrated in Figure 1, advantageously, the present accessory consists of an element 40 designed to at least partly cover the outer surface of the fixed fastening part 18.

Advantageously, there are also means for fixing the covering element at the outer surface of the fixed fastening part 18.

As illustrated in Figure 1, the present accessory comprises in particular a front part 42, designed to fit over the front face 30 of the fastening part 18. The front wall 42 has a recess 44 having a general rectangular shape, extending internally from the upper edge 45 of the front wall 42, between narrow upper coplanar extending side portions 46, 48 of the front wall 42. This slit 44 forms a suitable opening for access to the fixed fastening element 18 push-button 32 for releasing the belt.

As illustrated, the present accessory also has an upper wall, consisting of corresponding narrow upper walls 50, 52 transversally opposite to and at a distance from one another, the portions of wall 50, 52 having a curved profile connected to the side walls 54, 56 of the accessory (described in more detail below) and are designed to fit over the upper wall 20 of the fixed fastening part 18, only at the side edges of the latter.

As illustrated, the transversal distance between these narrow portions of wall 50, 52 is such that it forms an upper opening allowing the engagement part 16 access to the insertion slit 22 in the upper face 20 of the fixed fastening part 18.

As illustrated in Figures 1 and 2, the width of the upper portions of wall 50, 52 is equal to that of the upper extending portions 46, 48 of the flat front wall 42, whilst, in a perpendicular direction, the length of the upper covering portions 50, 52 is less than that of the corresponding side walls 54, 56 of the present covering accessory, as is clearly shown in Figure 2. This is because there is a split 50', 52', between an upper edge 50'a, 52'a of the corresponding side wall 54, 56 and a corresponding rear edge 50'b, 52'b of the upper walls 50, 52. As illustrated, the edges 50'a, 52'a and 50'b, 52'b are substantially at right angles to one another.

As may be seen from Figure 1, the side walls 54, 56 of the covering element are designed to fit over the corresponding side surfaces 36, 38 of the fixed part 18.

The side walls 54, 56 of the accessory have a mainly flat shape, also comprising respective lower portions, converging inwards and labelled 62, 64 in the accompanying drawings, which cover the side portions 31, 33 converging at the bottom of the fixed part 18.

Said mainly flat front wall 42 of the present covering accessory also has a lower portion 60 angled in such a way as to converge inwards and designed to cover a corresponding angled lower face 35 of the fastening means 18 fixed to the chassis, the height of the angled portion 60 being greater than the height of the corresponding lower angled portions 62, 64 of the side walls of the accessory. In practice, the angled lower portion 60 of the front wall 42 shares with the converging angled portions 62, 64 of the side walls of the accessory only one lower portion 63, 65 of its side end edges.

As is particularly evident in Figure 2, the present covering accessory has an advantageous hollow inner structure formed by the above-mentioned walls, which allow it to be adapted to a plurality of shapes of vehicle fixed fastening means.

This means that a covering element with an attractive appearance is provided, without in any way obstructing access to portions of the fixed fastening part, allowing the belt that holds the person to be coupled and released easily, for various types of safety belt fastening parts.

As illustrated, the accessory also has a lower wall 67 with a substantially rectangular flat portion 67a extending from the lower angled portion 60 of the front wall and very narrow rectangular portions 67b, 67c, extending from the side angled portions 62, 64, so as to form an opening having a general rectangular shape 69, suitable for allowing the passage of the lower part of corresponding fastening means fixed to the chassis.

As illustrated in Figures 1 and 2, the fixing means comprise at least one threaded hole 70, designed to receive and hold an engaging screw, labelled 71 in Figure 1, which is designed to engage with an outer surface of the fixed fastening means.

As illustrated, the first hole for connecting the accessory to the fixed fastening means is located on a side wall 54 of the accessory, substantially at the centre line of the flat portion of this wall 56, close to the rear edge 56a in the same side wall.

As illustrated, advantageously, the present connecting means also comprise a second threaded hole 72 for an engaging screw 73. This second threaded hole 72 is located in the side wall 56 of the accessory which is opposite the above-mentioned wall 54 with the connecting hole 70.

The second threaded hole 72 is transversally aligned with the first threaded hole 70, remaining substantially at the centre line of the flat portion of the side wall 56, close to its rear edge 54a.

This arrangement of fixing screws, engaging with the opposite side walls 36, 38 of the fixed fastening means 18, allows suitable adjustment and centring of the position of the accessory substantially relative to any transversal dimension of the fixed fastening part 18.

Advantageously, there is also a third connecting hole 74 for a fixing screw 75, this hole being located on the same wall as the first hole 70.

The third hole 74 is vertically aligned with the first hole 72 and is offset relative to the latter, in particular, close to the lower part 62 of the accessory and is suitable for forming advantageous means for angling or angular positioning of the accessory relative to the fixed fastening device 18 to which the accessory is connected.

With the present connecting system, the inner faces of the covering accessory may be put into contact with the corresponding surface of the fixed fastening part 18, or may be distanced from them. Therefore, the present covering accessory may be applied to various shapes and sizes of fixed fastening parts 18.

In accordance with another advantageous aspect, the accessory is equipped with advantageous means for the emission of a signal, suitable for allowing a user to rapidly locate the fixed fastening means.

Figure 3 shows how a second preferred embodiment of the accessory has signal emitter means, designed to emit a light signal.

In particular, there is a first and a second LED 102, 104, respectively at opposite side walls 154, 156 of the covering element 140.

Advantageously, the light emitter means 102, 104 are on a face which is facing upwards.

In particular, each face which is facing upwards 106, 108, supporting the respective LED 102, 104, is formed by the transversal face of a respective projection 110, 112, extending from the flat surface of the side wall 154, 156 of the accessory. The first and second LEDs 102, 104 are supplied with electricity through suitable means supported on the accessory. In particular, the means may consist of a circuit with a battery housed in an inner compartment, or under the outer surface, of the covering element 140.

However, alternatively, the lighting means could be supplied with electricity directly through the electric circuit, in particular by the motor vehicle battery.

Figure 4 shows how in a third preferred embodiment of the accessory disclosed, the arrangement of the light signal emitter means is achieved by creating a projection 210 extending from the flat front wall 242, forming an upper surface 206, extending transversally, designed to house a plurality of emitter elements aligned with one another, in particular in the form of a first, a second and a third LED respectively labelled 202, 204, 205 in Figure 4. As illustrated, the LEDs 202, 204, 205 are distanced from one another transversally and distributed along the front wall of the accessory.

In this third preferred embodiment, inside the covering element 240, there are also advantageous electricity supply means comprising a battery.

The latter arrangement or configuration of the LEDs, like the previous configuration or arrangement in the second preferred embodiment of the accessory, allows the person who must couple or release the safety belt to see easily. This arrangement with distanced LEDs allows the accessory to be seen even when one of the LEDs is, for any reason, covered or hidden from the user's view.

Obviously, it shall be understood that a different configuration or a configuration of LEDs obtained from a combination of the previous embodiments may also be imagined for the present invention.

This accessory is preferably made of metal, in particular with a polished outer surface. Although the embodiments of the accessory described herein are particularly preferred, the accessory could be made of any material, with any shape, colour and finish suitable for the specific purpose. Moreover, the emitter means could also consist of passive light emitting portions, for example of the fluorescent type.

According to another advantage, the present accessory makes the fastening element 18 easier or more convenient for the user to get hold of.

Moreover, the simple provision of such an accessory may help the user to locate the belt fastening part without having to look carefully and directly towards the fixed fastening part.

The invention described has evident industrial applications and can be modified and adapted in several ways without thereby departing from the scope of the inventive concept. Moreover, all details of the invention may be substituted by technically equivalent elements.

## Claims

1. An accessory (10) for a safety device (12) for holding a person in place in a vehicle, preferably in a seat in a motor vehicle; the device for holding the person in place comprising a belt (14) which wraps around and holds the person's body in place in the vehicle, the belt (14) being connected to an engagement part (16) which can be releasably coupled to a fastening part (18), the latter fixed to the vehicle chassis and having an outer surface; the accessory being **characterised in that** it consists of an element (40) designed to at least partly cover the outer surface of the fixed fastening part (18); and also being **characterised in that** there are means for connecting the covering element (40) at the outer surface of the fixed fastening part (18).

2. The accessory according to claim 1, comprising a front wall (42) designed to fit over the front face of the fixed fastening part (18).

3. The accessory according to claim 2, **characterised in that** the front wall (42) has a recess (44) extending from the upper edge (45) of the front wall (42), between narrow upper side portions (46, 48) of the front wall (42), forming an opening for access to the release push-button (32).

4. The accessory according to any of the foregoing claims, comprising an upper wall, consisting of opposite and distanced portions of wall (50, 52) designed to fit over the upper wall of the fixed fastening part (18) and transversally distanced to form an opening allowing the engagement part (16) access to the insertion slit (22) in the fixed part (18).

5. The accessory according to any of the foregoing claims, comprising a first and a second side wall (54, 56) designed to fit over the corresponding side surfaces (36, 38) of the fixed fastening part (18).

6. The accessory according to any of the foregoing claims, comprising a front lower portion (60) angled in such a way as to converge inwards, being designed to cover a corresponding angled lower face (35) of the fastening means fixed to the chassis.

7. The accessory according to any of the foregoing claims, comprising a first and a second side lower portion (62, 64) angled in such a way as to converge inwards, being designed to cover a corresponding angled lower face (33, 35) of the fastening means fixed to the chassis.

8. The accessory according to claim 7, **characterised in that** the height of the angled front lower portion (60) is greater than that of the first and second angled side lower portions (62, 64).

9. The accessory according to any of the foregoing claims, comprising a lower wall (67), forming a lower opening (69) for the passage of the fixed fastening means.

10. The accessory according to any of the foregoing claims, **characterised in that** the means for connecting the accessory form means for transversally centring the accessory relative to the fixed fastening means.

11. The accessory according to any of the foregoing claims, **characterised in that** the means for connecting the accessory form means for angular centring of the accessory relative to the fixed fastening means.

12. The accessory according to any of the foregoing claims, **characterised in that** the means for connecting the accessory comprise at least one threaded hole (70) for a screw engaging with the outer surface of the fixed fastening means.

13. The accessory according to claim 12, **characterised in that** the connecting hole (70) is located on a side wall of the accessory.

14. The accessory according to claim 12 or 13, **characterised in that** the connecting hole (70) is located substantially at the vertical centre line of the side wall of the accessory.

15. The accessory according to any of the foregoing claims from 12 to 14, **characterised in that** the connecting hole (70) is located close to the rear edge (54a) of the side wall of the accessory.

16. The accessory according to any of the foregoing claims, **characterised in that** the connecting means comprise at least one second threaded hole (72) for a screw (73) engaging with the outer surface of the accessory, at a side wall opposite that of the first connecting hole (70).

17. The accessory according to claim 16, **characterised in that** the second hole (72) is transversally aligned with the first hole (73).

18. The accessory according to any of the foregoing claims, **characterised in that** the connecting means comprise at least one threaded hole (74) for insertion of a fixing screw (75), the hole being located in the same wall (64) as a connecting hole and distanced from the latter.

19. The accessory according to any of the foregoing claims, **characterised in that**, on the accessory, there are signal emitter means.

20. The accessory according to claim 19, **characterised in that** the emitter means emit a light signal.

21. The accessory according to claim 19 or 20, **characterised in that** the emitter means are positioned on a surface which faces upwards.

22. The accessory according to any of the foregoing claims from 19 to 21, **characterised in that** the emitter means are positioned on the upper face of a portion projecting from the outer surface of the accessory.

23. The accessory according to claim 22, **characterised in that** the projecting portion extends from the front face of the accessory.

24. The accessory according to any of the foregoing claims from 19 to 23, **characterised in that** there is a plurality of emitter elements.

25. The accessory according to any of the foregoing claims from 22 to 24, **characterised in that** the projecting portion extends from the side face of the accessory.

26. The accessory according to claim 25, **characterised in that** a second projecting portion extends from the side face opposite that from which the second projecting portion of the accessory projects.

27. The accessory according to any of the foregoing claims from 19 to 26, **characterised in that** there are means for supplying power to the emitter means, the power supply means being positioned on the accessory.
